(19) Europäisches Patentamt
European Patent Office
Office européen des brevets

(11) **EP 1 777 505 A1**

(12) **EUROPÄISCHE PATENTANMELDUNG**

(43) Veröffentlichungstag:
**25.04.2007 Patentblatt 2007/17**

(51) Int Cl.:
***G01K 17/20*** (2006.01)   ***F27D 21/00*** (2006.01)

(21) Anmeldenummer: **05022820.4**

(22) Anmeldetag: **19.10.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SIEMENS AKTIENGESELLSCHAFT**
**80333 München (DE)**

(72) Erfinder: **Zaviska, Oldrich, Dr.**
**91058 Erlangen (DE)**

(54) **Virtuelle Temperaturmessstelle**

(57)   Die Erfindung betrifft ein Verfahren zum Bestimmen eines Temperaturprofils und der integralen mittleren Temperatur und/oder Achsentemperatur in einer dicken Wand oder Welle, wobei zur Ermittlung einer mittleren integralen Wandtemperatur bei Aufheiz- oder Abkühlvorgängen in einem Mehrschichtenmodell aus der mittleren Temperatur jeder Schicht die mittlere integrale Wandtemperatur berechnet wird. Dazu wird erfindungsgemäß indem zur Ermittlung der mittleren integralen Wandtemperatur bei Aufheiz- oder Abkühlvorgängen ein Mehrschichtenmodell herangezogen wird, das auf die mittlere Temperatur jeder Schicht zurückgreift.

FIG 1

**Beschreibung**

Die Erfindung betrifft ein Verfahren zur Bestimmung des Temperaturprofils und der mittleren integralen Temperatur und/oder Achsentemperatur in Wänden oder Wellen von dickwandigen Komponenten, wie beispielsweise von Dampfsammlern, Dampfleitungen, Ventilgehäusen, Turbinengehäusen- oder -wellen oder dergleichen.

Bei Aufwärmungs- und Abkühlvorgängen, wie sie insbesondere bei Änderung der Betriebsweise in Komponentenwänden, beispielsweise in einer Dampfturbine, einem Ventilgehäuse, einer Dampfleitung, auftreten, entstehen in dicken Wänden dieser Komponenten Temperaturgradienten, die zu erheblichen Materialspannungen führen können. Diese Materialspannungen können zu frühzeitigem Materialverschleiß bis hin zu Rissen führen.

Zur Überwachung derartiger Temperaturgradienten gerade bei Anwendungen in Dampfkraftanlagen wurde bisher mindestens eine oder mehrere Temperaturmessstellen in die Komponentenwand eingearbeitet. Aus ermittelten Messwerten der Wandtemperatur und der Arbeitsmediumstemperatur lassen sich Temperaturdifferenzen innerhalb der Komponentenwand abschätzen und insbesondere die zugeordnete mittlere integrale Wandtemperatur ermitteln. Der Vergleich der mittleren integralen Temperatur mit zulässigen Grenzwerten ermöglicht es, die thermischen Materialspannungen in zulässigen Grenzen zu halten. Dieses Verfahren ist jedoch vergleichsweise kostenintensiv und störanfällig.

Alternativ lässt sich die mittlere integrale Wandtemperatur unter Umgehung der kostspieligen und störanfälligen in die Wand eingebauten Messstellen oder auch bei Komponenten, bei denen keine Messstelle realisiert werden kann (z. B. Turbinenwelle), auch berechnen. Ein mögliches Verfahren ist die Berechnung dieser Temperatur mittels eines mathematischen Ersatzmodells, insbesondere auf der Grundlage der Besselgleichung, für die Wärmeleitung in einem metallischen Stab. Bisher auf dieser Basis in der Leittechnik großtechnischer Anlagen, wie beispielsweise Dampfkraftrohren, verwirklichte Systeme neigen jedoch, je nach der Periodendauer der Temperaturänderungen des Arbeitsmediums, zu Oszillationen, die eine zuverlässige Verwertung der solchermaßen gewonnenen Temperaturwerte begrenzen.

Der Erfindung liegt daher die Aufgabe zugrunde, ein Verfahren zur Ermittlung der mittleren integralen Wandtemperatur/Achsentemperatur anzugeben, welches auch ohne Verwendung von Temperaturmessstellen in der betroffenen Wand das Wandtemperaturprofil besonders genau abbildet und dabei besonders robust und eigenstabil ist.

Diese Aufgabe wird erfindungsgemäß gelöst, indem zur Ermittlung der mittleren integralen Wandtemperatur bei Aufheiz- oder Abkühlvorgängen ein Mehrschichtenmodell herangezogen wird, das auf die mittlere Temperatur jeder Schicht zurückgreift.

Bei einer derartigen Verwendung eines Mehrschichtenmodells wird die Komponentenwand gedanklich in eine von der Wanddicke abhängige Anzahl parallel zur Oberfläche liegender Schichten aufgeteilt. Die für jede Schicht verwendeten Werkstoffdaten (Wärmekapazität, Wärmeleitfähigkeit) sind unabhängig von der Schichtgeometrie. In jeder Schicht erfolgt eine instationäre Bilanzierung der ein- und austretenden Wärmeströme. Aus der durchgeführten instationären Wärmebilanz werden die entsprechenden mittleren Schichttemperaturen ermittelt.

Das Mehrschichtenmodell verwendet als Messwerte vorteilhafterweise lediglich die Prozessgrößen Dampftemperatur $T_{AM}$ und Dampfmassenstrom $\dot{m}_{AM}$ sowie das Anfangstemperaturprofil in der Wand, das bei dem ausgeglichen Anfangszustand durch eine Wandanfangstemperatur $\overline{T}_{Anf}$ dargestellt werden kann. Wenn keine Dampfmassenstrommessung vorhanden ist, wird der Dampfdurchsatz mittels eines auf dem Druck $p_{AM}$ und der Ventilstellung $H_{AV}$ bzw. dem freien Durchflussquerschnitt basierenden Ersatzmodells berechnet. Diese Prozessgrößen sind leicht erfassbar und stehen im Allgemeinen in der Leittechnik einer technischen Anlage ohnehin zur Verfügung. Insbesondere sind keine zusätzlichen, in die betroffene Wand einzufügenden Messstellen erforderlich.

Die Erfindung geht von der Überlegung aus, dass es möglich ist, das Temperaturprofil in einer Wand und folglich die mittlere integrale Wandtemperatur bei Aufwärm- und Abkühlvorgängen unter Verzicht auf kostenintensive und störanfällige in die Wand eingearbeitete Messstellen und auch, wenn keine direkte Temperaturmessung möglich ist, mittels eines Mehrschichtenmodells hinreichend genau und stabil zu berechnen. Hierzu ist die Bestimmung des momentanen Wandtemperaturprofils als Funktion der instationären Wärmestrombilanz vorgesehen. Prinzipiell ist es möglich, mit den inneren und äußeren Wandoberflächentemperaturen der dickwandigen Komponente oder sogar mit der Temperatur des Arbeitsmediums und der Umgebungs- oder Isolationstemperatur oder auch nur der Oberflächentemperatur (z. B. bei einer Welle) zu arbeiten.

Besonders günstig erweist sich jedoch, die dicken Wände in mehrere Schichten aufzuteilen. Ein hieraus resultierender Vorteil ist eine bessere Bestimmung des Wandtemperaturprofils und damit eine genauere Berechnung der mittleren integralen Wandtemperatur, da das instationäre Temperaturprofil innerhalb einer dicken Wand starke Nichtlinearität aufweist. Dies liegt insbesondere darin begründet, dass die Werkstoffwärmeleitfähigkeit und die spezifische Werkstoffwärmekapazität selber temperaturabhängig sind. Ein weiterer Vorteil der Verwendung eines Mehrschichtenmodells ist, dass bei einer hinreichend feinen Wandaufteilung in mehrere Schichten für die Berechnung der temperaturabhängigen Wärmeleitfähigkeit und spezifischen Wärmekapazität eine vorwärts gerichtete Berechnungsstruktur verwendet werden kann, d. h., dass die mittlere Temperatur der vorhergehenden anstelle der aktuellen Schicht verwendet wird, wodurch eine Rückkopplung, die auch positives Vorzeichen aufweisen kann, vermieden ist und die Berechnungsschaltung ein wesentlich robusteres Verhalten aufweist.

Die Berechnung des Wärmeübertragungskoeffizienten $\alpha$ erfolgt vorzugsweise unter Berücksichtigung der Dampfkondensation, des Nassdampfes und des überhitzten Dampfes. Dafür erfolgt in einem Modul die Erkennung des Arbeitsmediumszustandes. Es werden sowohl eventuelle Kondensation mit entsprechendem Dampf- und Wasseranteil als auch der überhitzte Dampfzustand erkannt. Liegt ausschließlich überhitzter Dampf als Arbeitsmedium vor, so wird der Wärmeübertragungskoeffizient $\alpha_{AM}$ für den Übergang des Wärmestroms vom Arbeitsmedium in die erste Wandschicht vorteilhafterweise als Funktion des Dampfdurchsatzes $\dot{m}_{AM}$ gebildet.

Tritt hingegen Dampfkondensation ein, so wird der Wärmeübertragungskoeffizient $\alpha$ in vorteilhafter Weise derart berechnet, dass für den kondensierten Anteil des Arbeitsmediums, die so genannte Kondensationskomponente, ein konstanter Wärmeübertragungskoeffizient $\alpha_W$ verwendet wird. Um diese Kondensationskomponente zu ermitteln, wird die Sättigungstemperatur $T_s$ als Funktion des Druckes $p_{AM}$, die Temperatur $T_{AM}$ des Arbeitsmediums und die Temperatur der beheizten/gekühlten Oberfläche $T_1$ (die mittlere Temperatur der ersten Schicht) verwendet.

Vom größeren der beiden Werte wird die Temperatur der ersten Schicht der dickwandigen Komponente $T_1$ abgezogen und das Ergebnis mit einer einstellbaren Konstante K verglichen. Der größere dieser beiden Werte bildet den Divisor von zwei Quotienten, die im Dividenden den Unterschied von Temperatur des Arbeitsmediums und Sättigungstemperatur $T_{AM}$-$T_S$ und den Unterschied von Sättigungstemperatur und Temperatur der ersten Schicht der dickwandigen Komponente $T_S$-$T_1$ haben. Der erste Quotient wird, sofern er positiv ist, mit dem Wärmeübertragungskoeffizienten $\alpha_{AM}$ des überhitzten Dampfes multipliziert, der zweite Quotient, sofern dieser positiv ist, mit dem Wärmeübertragungskoeffizient $\alpha_W$ für Wasser, um der Kondensation Rechnung zu tragen. Die Summe der beiden Produkte wird mit dem Wärmeübertragungskoeffizienten $\alpha_{AM}$ des überhitzten Dampfes verglichen. Der größere der beiden Werte ist der resultierende Wärmeübertragungskoeffizient $\alpha$.

Die Berechnung der mittleren integralen Wandtemperatur $T_{Int}$ ergibt sich in besonders vorteilhafter Weise aus einer instationären Bilanzierung der ein- und austretenden Wärmeströme in n einzelnen Schichten. Diese erfolgt in n so genannten Schichtenmodulen.

Im ersten Schichtenmodul wird mit Hilfe des Wärmeübertragungskoeffizienten $\alpha$, der Temperatur $T_{AM}$ des Arbeitsmediums und der mittleren Temperatur sowohl der ersten Schicht $T_1$ als auch der zweiten Schicht $T_2$, der Wärmestrom vom Arbeitsmedium in die erste Schicht $\dot{q}_{AM\text{-}1}$ sowie der von der ersten in die zweite Schicht $\dot{q}_{1\text{-}2}$ berechnet. Mit der Anfangstemperatur $T_{Anf}$ in der betroffenen Schicht ergibt sich aus der instationären Differenz der Wärmeströme vom Arbeitsmedium in die erste Schicht und von der ersten in die zweite Schicht $\dot{q}_{AM\text{-}1}$-$\dot{q}_{1\text{-}2}$ durch Integration über die Zeit die mittlere Temperatur $T_1$ der ersten Schicht.

In einem k-ten Schichtenmodul wird mit Hilfe der instationären Wärmestrombilanz von der (k-1)-ten Schicht $\dot{q}_{(k\text{-}1)\text{-}k}$ und aus der k-ten in die (k+1)-te Schicht $\dot{q}_{k\text{-}(k+1)}$ die mittlere Temperatur der k-ten Schicht $T_k$ berechnet. Mit der Anfangstemperatur $T_{Anf\_k}$ der k-ten Schicht ergibt sich aus Integration der instationären Differenz der Wärmeströme $\dot{q}_{(k\text{-}1)\text{-}k}$-$\dot{q}_{k\text{-}(k+1)}$ in die und aus der k-ten Schicht über die Zeit die mittlere Temperatur $T_k$ der k-ten Schicht.

Im letzten Schichtenmodul schließlich wird aus der instationären Wärmestrombilanz aus der vorletzten (n-1)-ten in die letzte (n-te) Schicht und aus der letzten Schicht in die Wärmeisolierung $\dot{q}_{(n\text{-}1)\text{-}n}$ - $\dot{q}_{n\text{-}ISOL}$ die mittlere Temperatur $T_n$ der letzten (n-ten) Schicht berechnet.

Die Temperaturabhängigkeit von Wärmeleitfähigkeit $\lambda_k$ und spezifischer Wärmekapazität $c_k$ der k-ten Schicht wird zweckmäßigerweise durch Polynome, vorzugsweise zweiten Grades, angenähert oder durch entsprechende Funktionen angegeben.

Schließlich wird in einem Modul die mittlere integrale Wandtemperatur $\overline{T}_{Int}$ in besonders vorteilhafter Weise durch Gewichtung der mittleren Temperaturen $T_k$ der einzelnen Schichten unter Berücksichtigung des Schichtwerkstoffgewichts und des Werkstoffgewichts des äquivalenten Wandabschnitts ermittelt.

Vorzugsweise wird das gesamte Verfahren in einer spezifischen ertüchtigten Datenverarbeitungsanlage, vorzugsweise in einem leittechnischen System einer Dampfkraftanlage, durchgeführt.

Der mit der Erfindung erzielten Vorteile bestehen insbesondere darin, die Wandtemperaturprofile und die mittlere integrale Wandtemperatur dickwandiger Komponenten unter Verzicht auf in die Komponentenwände eingearbeitete Messstellen allein aus den Prozessparametern Massenstrom und Temperatur des Arbeitsmediums sowie der Anfangstemperaturverteilung in der Wand und, wenn keine direkte Messung des Dampfdurchsatzes vorhanden oder möglich ist, zusätzlich mit Druck und einer Ventilstellung bzw. einem freien Durchflussquerschnitt zuverlässig und stabil angeben zu können. Je höher dabei die Anzahl der Schichten gewählt wird, desto genauer wird die Bestimmung der mittleren integralen Wandtemperatur/Achsentemperatur.

Ein Ausführungsbeispiel der Erfindung mit der Anwendung von drei Schichtenmodell und Isolierungsberücksichtigung (vierte Schicht) wird anhand einer Zeichnung näher erläutert. Darin zeigen:

FIG 1     einen Schnitt durch ein Dampfrohr als Beispiel für eine in drei Schichten aufgeteilte dicke Wand,

FIG 2     ein Blockschaltbild des Moduls für die Berechnung des Wärmeübertragungskoeffizienten,

FIG 3     ein Blockschaltbild des Moduls für die Berechnung der mittleren Temperatur der ersten Schicht,

FIG 4     ein Blockschaltbild des Moduls für die Berechnung der mittleren Temperatur der zweiten Schicht,

FIG 5    ein Blockschaltbild des Moduls für die Berechnung der mittleren Temperatur der dritten Schicht, und

FIG 6    ein Blockschaltbild des Moduls für die Berechnung der mittleren integralen Wandtemperatur.

Gleiche Teile sind in allen Figuren mit denselben Bezugszeichen versehen.

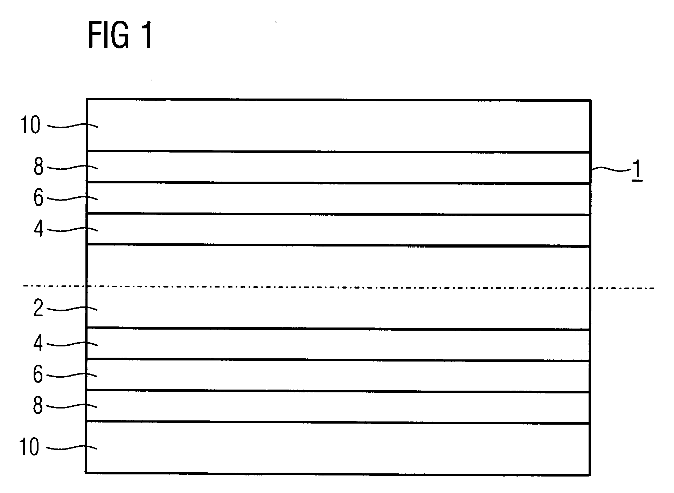

FIG 1 zeigt einen Rohrabschnitt 1 im Schnitt als Beispiel für eine dicke Wand. Der Innenraum 2 des Dampfrohres wird vom Arbeitsmedium (Dampf) durchströmt, von hier wird der Wärmestrom in die erste Schicht 4 übertragen. Hieran schlie-ßen sich die zweite Schicht 6 und die dritte Schicht 8 an. Der Rohrabschnitt 1 wird von der Isolation 10 umhüllt.

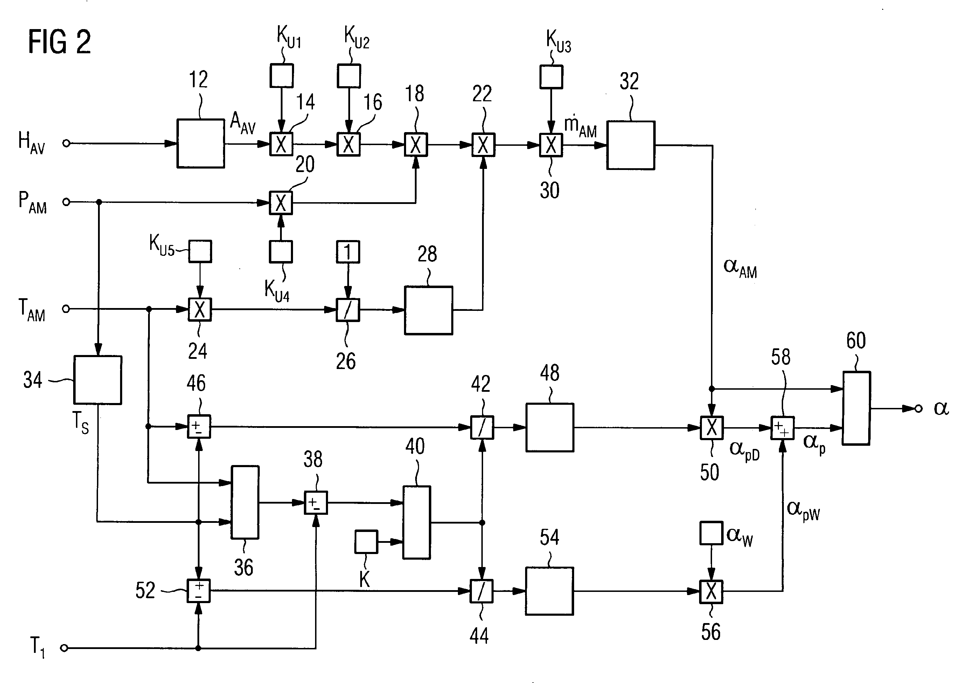

Gemäß FIG 2 wird der Messwert des Dampfdurchsatzes $\dot{m}_{AM}$ als Eingangssignal dem Funktionsgeber 32, der hieraus den Wärmeübertragungskoeffizienten $\alpha_{AM}$ als Funktion des Arbeitsmediumdurchsatzes $\dot{m}_{AM}$ für den Fall des Dampfes berechnet, $\alpha_{AM}=f(\dot{m}_{AM})$ zugeführt. Diese Funktion ist durch eine Anzahl von Stützpunkten gegeben, wobei Zwischenwerte durch geeignete Interpolationsverfahren gebildet werden.

Um auch den Fall partieller Kondensation zu berücksichtigen, wird der Druck des Arbeitsmediums $p_{AM}$ auf den Eingang eines Funktionsgebers 34 gegeben, der die Sättigungsfunktion $T_s=f(p_{AM})$ nachbildet und somit an seinem Ausgang die Sättigungstemperatur $T_s$ für den jeweiligen Druck liefert. Diese Funktion wird durch Stützpunkte (Drücke und Temperaturen aus Dampftabellen) gegeben, wobei Zwischenwerte über geeignete Interpolationsverfahren ermittelt werden.

Die Temperatur des Arbeitsmediums $T_{AM}$ wird mit der Sättigungstemperatur $T_S$ mit dem Maximumgeber 36 verglichen. Vom größeren Wert wird die mittlere Temperatur der ersten Schicht $T_1$ mit einem Subtrahierer 38 abgezogen. Die Differenz wird über einen Maximumgeber 40 mit einer einstellbaren Konstanten $K$ verglichen. Am Ausgang des Maximumgebers 40 liegt somit das Signal

$$N = \max(\max(T_{AM};T_S)-T_1;K)$$

an. Es wird auf die Divisoreingänge zweier Dividierer 42 und 44 gegeben.

Der Dividierer 42 erhält an seinem Dividendeneingang die über den Subtrahierer 46 gebildete Differenz $T_{AM}$-$T_S$. Der Funktionsgeber 48 gibt das Signal

$$\frac{T_{AM}-T_{XS}}{N}$$

nur an den einen Eingang des Multiplizierers 50 weiter, wenn es positiv ist. Das Signal gibt den prozentualen Anteil des verdampften Arbeitsmediums, der so genannten Dampfkomponente, an. Wenn die Differenz $T_{AM}$-$T_S$ negativ, also die Temperatur des Arbeitsmediums geringer als die Sättigungstemperatur ist, liegt am entsprechenden Eingang des Multiplizierers 50 das Signal "Null" an.

Am anderen Eingang des Multiplizierers 50 liegt der Wärmeübertragungskoeffizient $\alpha_{AM}$ für Dampf an. Auf den einen Eingang des Addierers 58 wird also der mit der Dampfkomponente gewichtete Wärmeubertragungskoeffizient $\alpha_{pD}$ gegeben.

Der Dividierer 44 erhält an seinem Dividendeneingang die über den Subtrahierer 52 gebildete Differenz $T_s$-$T_1$. Der Funktionsgeber 54 gibt das Signal

$$\frac{T_S-T_1}{N}$$

nur an den einen Eingang des Multiplizierers 56 weiter, wenn es positiv ist. Das Signal gibt den prozentualen Anteil der Kondensationskomponente an. Wenn die Differenz $T_S$-$T_1$ negativ, also die mittlere Temperatur der ersten Schicht höher als die Sättigungstemperatur ist, liegt am entsprechenden Eingang des Multiplizierers 56 das Signal "Null" an.

Am anderen Eingang des Multiplizierers 56 liegt der Wärmeübertragungskoeffizient $\alpha_W$ für Wasser an. Auf den zweiten Eingang des Addierers 59 wird also der mit der Kondensationskomponente gewichtete Wärmeübertragungskoeffizient $\alpha_{pW}$ gegeben.

Am Maximumgeber 60 liegt an einem Eingang der Wärmeübertragungskoeffizient $\alpha_{AM}$ für den Fall Dampfes. Am zweiten Eingang liegt der vom Addierer 58 gebildete Wärmeübertragungskoeffizient

$$\alpha_p = \alpha_{pW} + \alpha_{pD}$$

für den Fall partieller Kondensation. Der größere der beiden Werte ist der aktuelle Wärmeübertragungskoeffizient $\alpha$.

Wenn keine Dampfmassenstrommessung vorhanden ist, wird der Dampfmassenstrom z. B. mit Hilfe der folgenden Berechnungsschaltung berechnet. In einem Funktionsgeber 12 wird der Istwert einer Ventilstellung $H_{AV}$ in eine freie Durchflussfläche $A_{AV}$ umgewandelt. Über Multiplizierer 14 und 16 wird die freie Durchflussfläche mit geeigneten Umrechnungsfaktoren $K_{U1}$ und $K_{U2}$ versehen und auf einen weiteren Multiplizierer 18 gegeben. Der Druck des Arbeitsmediums $p_{AM}$ wird - ebenfalls über einen Muitiplizierer 20 mit einer geeigneten Umrechnungskonstante $K_{U4}$ versehen - auf den zweiten Eingang des Multiplizierers 18 gegeben, dessen Ergebnis auf den Eingang eines Multiplizierers 22 gegeben wird. Die über einen Multiplizierer 24 mit einem geeigneten Umrechnungsfaktor $K_{U5}$ versehene Temperatur $T_{AM}$ des Arbeitsmediums wird auf den Nennereingang eines Dividierers 26 gegeben, dessen Zählereingang eine Eins enthält. Am Ausgang liegt der reziproke Wert an. Über einen Radizierer 28 wird die Wurzel des reziproken Wertes auf den zweiten Eingang des Multiplizierers 22 gegeben. Das über einen Multiplizierer 30 mit einem geeigneten Umrechnungsfaktor $K_{U3}$ versehene Signal am Ausgang des Multiplizierers 22 bildet den Dampfdurchsatz $\dot{m}_{AM}$ ab. Insgesamt ergibt sich somit für die Berechnung des Dampfdurchsatzes

$$A_{AV} = f(H_{AV})$$

$$\dot{m}_{AM} = K_{U3} * \sqrt{\frac{1}{K_{U5}T_{AM}}} K_{U4}T_{AM}K_{U1}K_{U2}A_{AV} \ .$$

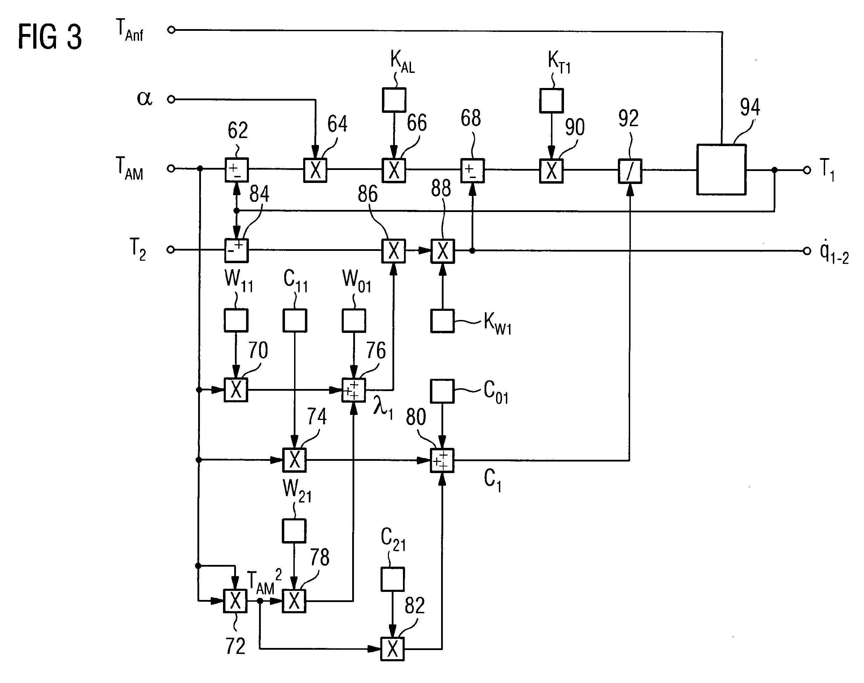

Das Modul für die erste Schicht gemäß FIG 3 ermittelt die mittlere Temperatur der ersten Schicht $T_1$ aus der instationnären Wärmestrombilanz. Hierzu wird zunächst über einen Subtrahierer 62 aus der Temperatur des Arbeitsmediums $T_{AM}$ und der mittleren Temperatur der ersten Schicht $T_1$ die Temperaturdifferenz $T_{AM}-T_1$ gebildet und über einen Multiplizierer 64 mit dem Wärmeübertragungskoeffizienten $\alpha$ multipliziert. Ein Multiplizierer 66 versieht dieses Signal mit einem geeigneten einstellbaren Koeffizienten $K_{AL}$, der für eine äquivalente erste Oberfläche- für den Wärmeübergang vom Arbeitsmedium in die Komponentenwand steht. Am Ausgang des Multiplizierers 66 liegt das Signal für den Wärmestrom aus dem Arbeitsmedium in die erste Schicht

$$\dot{q}_{AM-1} = \alpha K_{AL}(T_{AM} - T_1)$$

an, welches auf den Minuendeingang eines Subtrahierers 68 gegeben wird.

Die Temperaturabhängigkeit von Wärmeleitfähigkeit $\lambda_1$ und spezifischer Wärmekapazität $c_1$ der ersten Schicht wird im Ausführungsbeispiel durch Polynome zweiter Ordnung, die durch Koeffizienten $W_{01}$, $W_{11}$ und $W_{21}$ sowie $C_{01}$, $C_{11}$ und $C_{21}$ dargestellt sind. Die im Beispiel verwendeten Polynome haben folgende Form:

$$\lambda_1 = W_{01} + W_{11}T_{AM} + W_{21}T_{AM}^2$$

$$c_1 = C_{01} + C_{11}T_{AM} + C_{21}T_{AM}^2$$

Dies wird schaltungstechnisch nachgebildet, indem die Temperatur des Arbeitsmediums $T_{AM}$ auf die Eingänge dreier Multiplizierer 70, 72 und 74 gegeben wird. Zwecks Vermeidung einer möglichen positiven Rückkopplung (je nach Werkstoffeigenschaften) und somit einer Erhöhung der Stabilität des Systems wird hier die vorwärts gerichtete Struktur verwendet, d. h., es wird anstelle der mittleren Temperatur der ersten Schicht $T_1$ die Temperatur des Arbeitsmittels $T_{AM}$ verwendet.

Zur Berechnung der Wärmeleitfähigkeit liegt am zweiten Eingang des Multiplizierers 70 die Polynomkonstante $W_{11}$ an. Der Ausgang wird auf einen Eingang eines Addierers 76 geschaltet.

Am Ausgang des als Quadrierer geschalteten Multiplizierers 72 liegt das Signal für das Quadrat der Temperatur des Arbeitsmediums $T_{AM}^2$. Es wird über den Multiplizierer 78 mit der Polynomkonstante $W_{21}$ multipliziert und anschließend auf einen zweiten Eingang des Addierers 76 gegeben.

Die Polynomkonstante $W_{01}$ wird auf einen dritten Eingang des Addierers 76 geschaltet. An seinem Ausgang liegt die durch obigen Ausdruck gegebene temperaturabhängige Wärmeleitfähigkeit $\lambda_1$ an.

Zur Berechnung der spezifischen Wärmekapazität wird der zweite Eingang des Multiplizierers 74 mit der Polynomkonstanten $C_{11}$ beaufschlagt. Der Ausgang des Multiplizierers 74 liegt an einem Eingang eines Addierers 80. An einem zweiten Eingang des Addierers 80 liegt die Polynomkonstante $C_{01}$. Das am Ausgang des Multiplizierers 72 anstehende Quadrat der Temperatur des Arbeitsmediums $T_{AM}^2$ wird mittels des Multiplizierers 82 mit dem Polynomkoeffizienten $C_{21}$ versehen und anschließend auf einen dritten Eingang des Addierers 80 gegeben. An seinem Ausgang liegt die durch obigen Ausdruck gegebene temperaturabhängige spezifische Wärmekapazität $c_1$ an.

Der Subtrahierer 84 bildet die Temperaturdifferenz aus den mittleren Temperaturen der ersten und der folgenden Schicht $T_1$-$T_2$. Sie wird über den Multiplizierer 86 mit der vom Ausgang des Addierers 76 temperaturabhängigen Wärmeleitfähigkeit $\lambda_1$ und über den Multiplizierer 88 mit der Konstanten $K_{W1}$, welche die Abhängigkeit von der Schichtdicke und der äquivalenten Oberfläche enthält, multipliziert. Am Ausgang des Multiplizierers 88 liegt das Signal für den Wärmestrom aus der ersten in die zweite Schicht

$$\dot{q}_{1\text{-}2} = \lambda_1 K_{W1}(T_1 - T_2)\ .$$

Dieses Signal wird auf den Subtrahendeneingang des Subtrahierers 68 gegeben. An seinem Ausgang liegt das Signal für die Wärmestromdifferenz $\dot{q}_{AM\text{-}1}$-$q_{1\text{-}2}$, welches mittels des Multiplizierers 90 mit einem Koeffizienten $K_{T1}$, der die Temperaturänderungsgeschwindigkeit in der ersten Schicht in Abhängigkeit vom Schichtwerkstoffgewicht berücksichtigt, versehen wird.

Das resultierende Signal wird mittels eines Dividierers 92 durch das am Ausgang des Addierers 80 anliegende Signal für die temperaturabhängige spezifische Wärmekapazität $c_1$ dividiert.

Die mittlere Temperatur der inneren Schicht ergibt sich aus der Integration der Wärmestromdifferenz über die Zeit t

$$T_1 = \frac{K_{T1}}{c_1}\int_0^t (\dot{q}_{AM-1} - \dot{q}_{1\text{-}2})dt + T_{Anf1}\ .$$

Das am Ausgang des Dividierers 92 anliegende Signal wird einem Integrierer 94 zugeführt, der als Anfangsbedingung die Anfangstemperatur der ersten Schicht $T_{Anf1}$ verwendet.

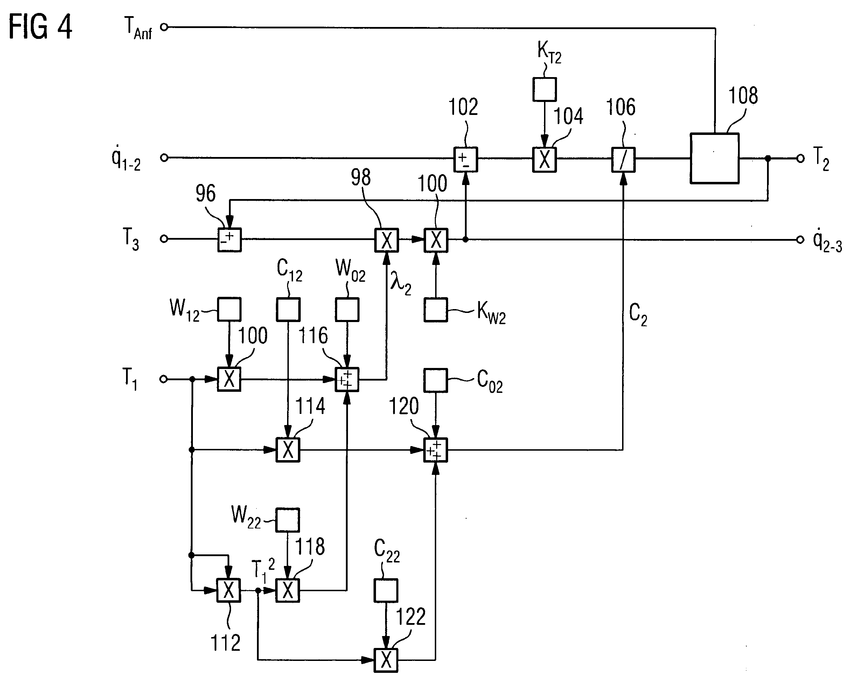

Das Modul für die zweite Schicht gemäß FIG 4 ermittelt die mittlere Temperatur der zweiten Schicht $T_2$ aus der instationären Wärmestrombilanz. Hierzu wird zunächst über einen Subtrahierer 96 aus der Temperatur der dritten Schicht $T_3$ und der mittleren Temperatur der zweiten Schicht $T_2$ die Differenz $T_2$-$T_3$ gebildet und über einen Multiplizierer 98 mit der temperaturabhängigen Wärmeleitfähigkeit $\lambda_2$ der zweiten Schicht multipliziert. Ein Muitiplizierer 100 versieht dieses Signal mit einem geeigneten einstellbaren Koeffizienten $K_{W2}$, der die Abhängigkeit der Wärmeleitfähigkeit von der Schichtdicke und Oberfläche enthält. Am Ausgang des Multiplizierers 100 liegt das Signal für den Wärmestrom aus der zweiten in die dritte Schicht

$$\dot{q}_{2-3} = \lambda_2 K_{W2}(T_2 - T_3)$$

an, welches auf den Subtrahendeneingang eines Subtrahierers 102 gegeben wird.

Am Minuendeneingang des Subtrahierers 102 liegt das Signal für den Wärmestrom $\dot{q}_{1\text{-}2}$ von der ersten in die zweite Schicht. Sein Ausgang liefert die Wärmestromdifferenz $\dot{q}_{1\text{-}2}\text{-}\dot{q}_{2\text{-}3}$. Ein Multiplizierer 104 versieht dieses Signal mit einem einstellbaren Koeffizienten $K_{T2}$, welcher die Temperaturänderungsgeschwindigkeit in der zweiten Schicht in Abhängigkeit vom Schichtwerkstoffgewicht berücksichtigt. Anschließend wird das Signal über einen Dividierer 106 durch die temperaturabhängige spezifische Wärmekapazität $c_2$ der zweiten Schicht dividiert und sodann auf den Eingang eines Integrierers 108 gegeben. Der Integrierer 108 verwendet als Anfangsbedingung die Anfangstemperatur $T_{Anf2}$ der zweiten Schicht. An seinem Ausgang liegt die mittlere Temperatur der zweiten Schicht

$$T_2 = \frac{K_{W2}}{c_2}\int_0^t(\dot{q}_{1\text{-}2}-\dot{q}_{2\text{-}3})dt + T_{Anf2}\,.$$

Die Temperaturabhängigkeit von Wärmeleitfähigkeit $\lambda_2$ und spezifischer Wärmekapazität $c_2$ der zweiten Schicht wird wieder durch Polynome mit Koeffizienten $W_{02}$, $W_{12}$ und $W_{22}$ sowie $c_{02}$, $c_{12}$ und $c_{22}$ angenähert. Die Polynome sind:

$$\lambda_2 = W_{02} + W_{12}T_1 + W_{22}T_1^2$$

$$c_2 = C_{02} + C_{12}T_1 + C_{22}T_1^2$$

Dies wird schaltungstechnisch nachgebildet, indem die mittlere Temperatur der ersten Schicht $T_1$ auf die Eingänge dreier Multiplizierer 110, 112 und 114 gegeben wird. Zwecks Vermeidung einer möglichen positiven Rückkopplung (je nach Werkstoffeigenschaften) und somit einer Erhöhung der Stabilität des Systems wird eine vorwärts gerichtete Struktur verwendet, d. h., es wird eine hier die mittlere Temperatur der ersten Schicht $T_1$ anstelle der mittleren Temperatur der zweiten Schicht $T_2$ verwendet.

Zur Berechnung der Wärmeleitfähigkeit liegt am zweiten Eingang des Multiplizierers 110 die Polynomkonstante $W_{12}$ an. Der Ausgang wird auf einen Eingang eines Addierers 116 geschaltet.

Am Ausgang des als Quadrierer geschalteten Multiplizierers 112 liegt das Signal für das Quadrat der mittleren Temperatur der ersten Schicht $T_1^2$. Es wird über den Multiplizierer 118 mit der Polynomkonstante $W_{22}$ multipliziert und anschließend auf einen zweiten Eingang des Addierers 116 gegeben.

Die Polynomkonstante $W_{02}$ wird auf einen dritten Eingang des Addierers 116 geschaltet. An seinem Ausgang liegt die durch obigen Ausdruck gegebene temperaturabhängige Wärmeleitfähigkeit $\lambda_2$ an.

Zur Berechnung der temperaturabhängigen spezifischen Wärmekapazität wird der zweite Eingang des Multiplizierers 114 mit dem Polynomkoeffizienten $C_{12}$ beaufschlagt. Der Ausgang des Multiplizierers 114 liegt an einem Eingang eines Addierers 120. An einem zweiten Eingang des Addierers 120 liegt der Polynomkoeffizient $C_{02}$. Das am Ausgang des Multiplizierers 112 anstehende Quadrat der mittleren Temperatur der ersten Schicht $T_1^2$ wird mittels des Multiplizierers 122 mit dem Polynomkoeffizient $C_{22}$ versehen und anschließend auf einen dritten Eingang des Addierers 120 gegeben. An seinem Ausgang liegt die durch obigen Ausdruck gegebene temperaturabhängige spezifische Wärmekapazität $c_2$ an.

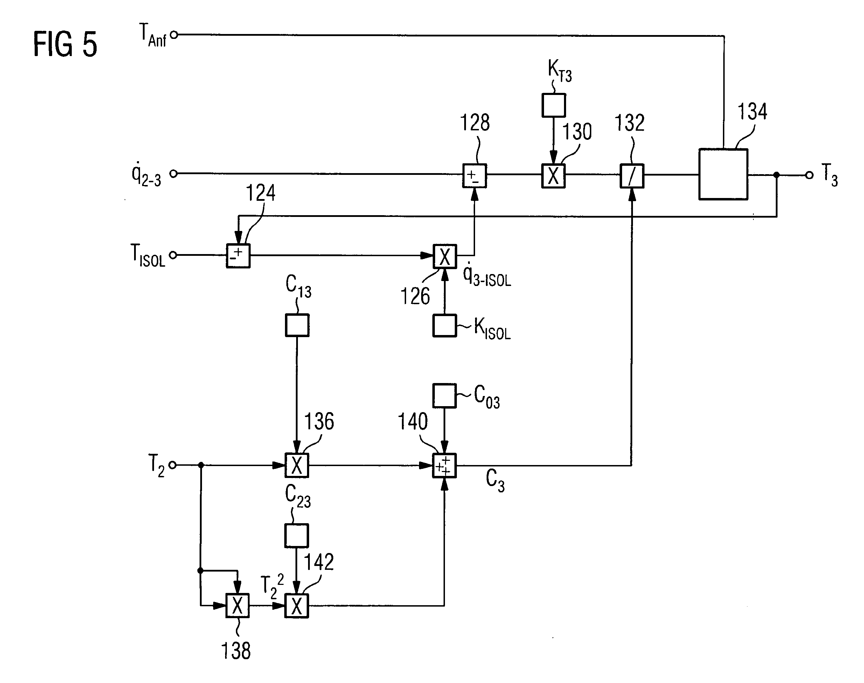

Das Modul für die dritte Schicht gemäß FIG 5 ermittelt die mittlere Temperatur der dritten Schicht $T_3$ aus der Wärmestrombilanz. Hierzu wird zunächst über einen Subtrahierer 124 aus der Temperatur der Isolierung $T_{ISOL}$ und der mittleren Temperatur der dritten Schicht $T_3$ die Temperaturdifferenz $(T_3\text{-}T_{ISOL})$ gebildet und über einen Multiplizierer 126 mit einer geeigneten einstellbaren Konstanten $K_{ISOL}$, welche für die Grö-ße der Wärmeverluste der Isolierung steht, multipliziert. Am Ausgang des Multiplizierers 126 liegt das Signal für den Wärmestrom aus der dritten Schicht in die Isolierung (hierbei besteht auch die Möglichkeit einer direkten Angabe der Wärmeverluste der Isolierung)

$$\dot{q}_{3\_ISOL} = K_{ISOL}(T_3 - T_{ISOL})$$

an, welches auf den Subtrahendeneingang eines Subtrahierers 128 gegeben wird.

Am Minuendeneingang des Subtrahierers 128 liegt das Signal für den Wärmestrom $\dot{q}_{2\text{-}3}$ von der zweiten in die dritte Schicht. Sein Ausgang liefert die Wärmestromdifferenz $\dot{q}_{2\text{-}3}$-$\dot{q}_{3\_ISOL}$. Ein Multiplizierer 130 versieht dieses Signal mit einem einstellbaren Koeffizienten $K_{T3}$, welcher die Temperaturänderungsgeschwindigkeit in der dritten Schicht in Abhängigkeit vom Schichtwerkstoffgewicht berücksichtigt. Anschließend wird das Signal über einen Dividierer 132 durch die temperaturabhängige spezifische Wärmekapazität $c_3$ der dritten Schicht dividiert und sodann auf den Eingang eines Integrierers 134 gegeben. Der Integrierer 134 verwendet als Anfangsbedingung die Anfangstemperatur der dritten Schicht $T_{Anf3}$. An seinem Ausgang liegt die mittlere integrale Temperatur der dritten Schicht

$$T_3 = \frac{K_{W3}}{c_3} \int_0^t (\dot{q}_{2-3} - \dot{q}_{3-ISOL})dt + T_{Anf3} \ .$$

Die Temperaturabhängigkeit der spezifischen Wärmekapazität $c_3$ der dritten Schicht wird durch ein Polynom mit Koeffizienten $C_{03}$ , $C_{13}$ und $C_{23}$ angenähert.

Das Polynom ist

$$c_3 = C_{03} + C_{13}T_2 + C_{23}T_2^2 \ .$$

Zwecks Vermeidung einer möglichen positiven Rückkopplung (je nach Werkstoffeigenschaften) und somit einer Erhöhung der Stabilität des Systems wird hierbei eine vorwärts gerichtete Struktur verwendet, d. h., es wird hier die mittlere Temperatur der zweiten Schicht $T_2$ anstelle der mittleren Temperatur der dritten Schicht $T_3$ verwendet.

Dies wird schaltungstechnisch nachgebildet, indem die mittlere Temperatur der zweiten Schicht $T_2$ auf die Eingänge zweier Multiplizierer 136 und 138 gegeben wird. Der zweite Eingang des Multiplizierers 136 wird mit dem Koeffizienten $C_{13}$ beaufschlagt. Der Ausgang des Multiplizierers 136 liegt an einem Eingang eines Addierers 140. An einem zweiten Eingang des Addierers 140 liegt der Polynomkoeffizient $C_{03}$. Das am Ausgang des Multiplizierers 138 anstehende Quadrat der mittleren Temperatur der zweiten Schicht $T_2^2$ wird mittels eines Multiplizierers 142 mit dem Polynomkoeffizient $C_{23}$ versehen und anschließend auf einen dritten Eingang des Addierers 140 gegeben. An seinem Ausgang liegt die durch obigen Ausdruck gegebene temperaturabhängige spezifische Wärmekapazität $c_3$ an.

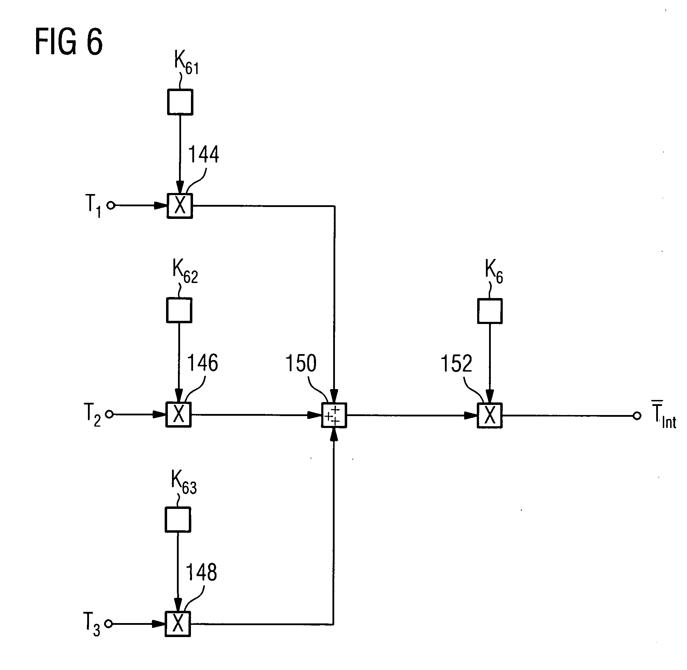

Gemäß FIG 6 wird die mittlere integrale Wandtemperatur $\overline{T}_{Int}$ aus den mittleren Temperaturen der einzelnen Schichten $T_1$, $T_2$ und $T_3$ ermittelt. Drei Multiplizierer 144, 146 und 148 versehen die Temperatursignale mit geeigneten Gewichtungsfaktoren $K_{G1}$, $K_{G2}$ und $K_{G3}$, welche die mittleren Temperaturen der einzelnen Schichten entsprechend dem Schichtwerkstoffgewicht gewichten. Die gewichteten Temperatursignale gelangen auf Eingänge eines Addierers 150. Sein Ausgangssignal wird mittels eines Multiplizierers 152 mit einem Koeffizienten $K_G$ versehen, der den Einfluss des Gesamtwerkstoffgewichts des äquivalenten Wandabschnittes berücksichtigt. Am Ausgang des Multiplizierers 152 liegt das Signal für die mittlere integrale Wandtemperatur $\overline{T}_{Int}$.

**Patentansprüche**

1. Verfahren zum Bestimmen eines Temperaturprofils und der integralen mittleren Temperatur und/oder Achsentemperatur in einer dicken Wand oder Welle, wobei zur Ermittlung einer mittleren integralen Wandtemperatur bei Aufheiz- oder Abkühlvorgängen in einem Mehrschichtenmodell aus der mittleren Temperatur jeder Schicht die mittlere integrale Wandtemperatur berechnet wird.

2. Verfahren nach Anspruch 1, wobei zur Berechnung die Größen Temperatur und Massenstrom des Arbeitsmediums sowie die Anfangstemperatur in der dicken Wand verwendet werden.

3. Verfahren nach einem der Anspruche 1 oder 2, wobei der Dampfdurchsatz aus Druck und Temperatur des Arbeitsmediums sowie einem freien Ventilquerschnitt ermittelt wird.

4. Verfahren nach einem der Ansprüche 1 bis 3, wobei der Wärmeübergangskoeffizient für den Wärmeübergang vom Arbeitsmedium in die Komponentenwand bei ausschließlich überhitztem Dampf als Funktion des Dampfdurchsatzes ermittelt wird.

**5.** Verfahren nach einem der Ansprüche 1 bis 3, wobei der Wärmeübergangskoeffizient für den Wärmeübergang vom Arbeitsmedium in die dickwandige Komponente beim Vorliegen von Kondensation in Abhängigkeit von der Kondensationskomponente ermittelt wird.

**6.** Verfahren nach einem der Ansprüche 1 bis 5, wobei die mittlere Temperatur jeder Schicht aus der instationären Wärmestrombilanz für diese Schicht berechnet wird.

**7.** Verfahren nach Anspruch 6, wobei die Temperaturabhängigkeit der Wärmeleitfähigkeit jeder Schicht durch ein Polynom, insbesondere ein Polynom zweiter Ordnung, angenähert wird.

**8.** Verfahren nach Anspruch 6, wobei die Temperaturabhängigkeit der spezifischen Wärmekapazität jeder Schicht durch ein Polynom, insbesondere durch ein Polynom zweiter Ordnung, angenähert wird.

**9.** Verfahren nach einem der Ansprüche 1 bis 8, wobei die mittlere integrale Wandtemperatur aus den mittleren Temperaturen der Schichten unter Berücksichtigung des Werkstoffgewichts der einzelnen Schichten und des Gesamtgewichtes des äquivalenten Wandabschnitts ermittelt wird.

FIG 1

10

8

6

4

1

2

4

6

8

10

FIG 2

FIG 3

EP 1 777 505 A1

FIG 4

FIG 5

FIG 6

**Europäisches Patentamt**

## EUROPÄISCHER RECHERCHENBERICHT

Nummer der Anmeldung

EP 05 02 2820

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 824 305 B1 (BOYD RONALD D ET AL) 30. November 2004 (2004-11-30) * Spalte 3, Zeile 52 - Spalte 9, Zeile 43; Abbildungen 1-4 * ----- | 1-9 | INV. G01K17/20 F27D21/00 |
| X | DE 40 26 731 A1 (WIPPENBECK, PETER, PROF. DIPL.-ING., 7080 AALEN, DE; RUF, WOLF-DIETER,) 27. Februar 1992 (1992-02-27) * Anspruch 12 * ----- | 1 | |
| A | US 4 657 507 A (KOHAMA ET AL) 14. April 1987 (1987-04-14) * Spalte 2, Zeile 3 - Spalte 2, Zeile 13 * * Spalte 2, Zeile 45 - Spalte 8, Zeile 43; Abbildung 3 * ----- | 1-9 | |
| A | PATENT ABSTRACTS OF JAPAN Bd. 013, Nr. 005 (E-701), 9. Januar 1989 (1989-01-09) & JP 63 217621 A (HITACHI LTD), 9. September 1988 (1988-09-09) * Zusammenfassung * ----- | 1-9 | RECHERCHIERTE SACHGEBIETE (IPC) F27D G01K |
| A | PATENT ABSTRACTS OF JAPAN Bd. 011, Nr. 309 (E-547), 8. Oktober 1987 (1987-10-08) & JP 62 101037 A (HITACHI LTD), 11. Mai 1987 (1987-05-11) * Zusammenfassung * ----- | 1-9 | |
| A | DE 25 04 679 A1 (KOPPERS CO.,INC) 28. August 1975 (1975-08-28) * Anspruch 1 * ----- | 1-9 | |

Der vorliegende Recherchenbericht wurde für alle Patentansprüche erstellt

| Recherchenort | Abschlußdatum der Recherche | Prüfer |
|---|---|---|
| München | 24. Mai 2006 | Thomte, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**
EP 05 02 2820

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-05-2006

| Im Recherchenbericht angeführtes Patentdokument | | | Datum der Veröffentlichung | Mitglied(er) der Patentfamilie | | Datum der Veröffentlichung |
|---|---|---|---|---|---|---|
| US 6824305 | B1 | | 30-11-2004 | KEINE | | |
| DE 4026731 | A1 | | 27-02-1992 | KEINE | | |
| US 4657507 | A | | 14-04-1987 | AU | 573425 B2 | 09-06-1988 |
| | | | | AU | 5409186 A | 04-09-1986 |
| | | | | DE | 3605740 A1 | 28-08-1986 |
| | | | | GB | 2171816 A | 03-09-1986 |
| | | | | KR | 9005989 B1 | 18-08-1990 |
| JP 63217621 | A | | 09-09-1988 | KEINE | | |
| JP 62101037 | A | | 11-05-1987 | JP | 1983897 C | 25-10-1995 |
| | | | | JP | 7022129 B | 08-03-1995 |
| DE 2504679 | A1 | | 28-08-1975 | JP | 50115201 A | 09-09-1975 |
| | | | | JP | 57056954 B | 02-12-1982 |

Für nähere Einzelheiten zu diesem Anhang : siehe Amtsblatt des Europäischen Patentamts, Nr.12/82